# EUROPÄISCHE PATENTSCHRIFT

(11) **EP 3 954 650 B1**
(45) Veröffentlichungstag und Bekanntmachung des Hinweises auf die Patenterteilung: **02.10.2024**
(21) Anmeldenummer: 20020366.9
(22) Anmeldetag: 11.08.2020
(51) Int. Cl.: C01B 3/48, B01D 53/047, C01B 3/56, C01B 32/50

(54) **VERFAHREN UND ANLAGE ZUR HERSTELLUNG VON WASSERSTOFF UND ABSCHEIDUNG VON KOHLENDIOXID**
METHOD AND SYSTEM FOR THE PRODUCTION OF HYDROGEN AND DEPOSITION OF CARBON DIOXIDE
PROCÉDÉ ET INSTALLATION DE FABRICATION D'HYDROGÈNE ET DE SÉPARATION DU DIOXYDE DE CARBONE

(43) Veröffentlichungstag der Anmeldung: 16.02.2022
(73) Patentinhaber: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Schmidt, Sophia, 60439 Frankfurt am Main (DE); Schmid McGuiness, Teja, 60439 Frankfurt am Main (DE)
(74) Vertreter: Air Liquide

(56) Entgegenhaltungen:
- US-A1- 2015 141 535
- US-A1- 2015 321 914
- AASBERG-PETERSEN K ET AL: "Natural gas to synthesis gas Catalysts and catalytic processes", JOURNAL OF NATURAL GAS SCIENCE AND ENGINEERING, ELSEVIER, AMSTERDAM, NL, vol. 3, no. 2, 28 March 2011 (2011-03-28), pages 423 - 459, XP028217916, ISSN: 1875-5100, [retrieved on 20110407], DOI: 10.1016/J.JNGSE.2011.03.004

## Beschreibung

### Gebiet der Erfindung

Die Erfindung betrifft ein Verfahren zur Herstellung von Wasserstoff durch Reformieren von Kohlenwasserstoffen mit Dampf und zur Abscheidung von Kohlendioxid. Die Erfindung betrifft ferner eine Anlage zur Herstellung von Wasserstoff durch Reformieren von Kohlenwasserstoffen mit Dampf und zur Abscheidung von Kohlendioxid.

### Stand der Technik

Die global produzierte Wasserstoffmenge wird heute auf 70 Mt pro Jahr geschätzt, wobei der größte Teil davon durch endotherme Reformierung von Erdgas mit Dampf an einem Reformierungskatalysator auf Nickelbasis erzeugt wird. Bei diesem als Dampfreformierung *(steam methane reforming* - SMR) bezeichneten Prozess reagiert hauptsächlich Methan und Wasserdampf zu einem Gemisch aus hauptsächlich Wasserstoff, Kohlenmonoxid und Kohlendioxid. Der Dampfreformierungsprozess weist einen großen Kohlendioxidfußabdruck auf, da für jede Tonne produzierten Wasserstoffs circa 9 Tonnen Kohlendioxid emittiert werden. Berechnungen zufolge trägt die Dampfreformierung von Erdgas alleine mit einem Anteil von 1,5 % zu den global verursachten Kohlendioxidemissionen bei (Wisman et al., Science 364, 756-759, 2019).

Wasserstoff wird auch durch autotherme Reformierung *(autothermal reforming -* ATR) von Erdgas hergestellt. Von der Dampfreformierung unterscheidet sich die autotherme Reformierung dadurch, dass dem endothermen Reformierungsschritt ein exothermer partieller Oxidationsschritt vorangeht, welcher die für den nachfolgenden endothermen, katalytischen Schritt nötige Reaktionswärme liefert. Für die partielle Oxidation wird in der Regel Luft oder Sauerstoff, beispielsweise aus einer Luftzerlegungsanlage, als Oxidationsmedium verwendet. Ferner erfordert die ATR einen Brenner, welcher mit Hilfe eines Brenngases die erforderliche Aktivierungsenergie für die partielle Oxidation zur Verfügung stellt. Das Resultat dieser beiden Reaktionsschritte, der partiellen Oxidation von Methan und der anschließenden endothermen katalytischen Reformierung des Zwischenprodukts mit Dampf, ist ebenfalls ein hauptsächlich Wasserstoff, Kohlenmonoxid und Kohlendioxid aufweisendes Synthesegas.

Um die genannten Prozesse umweltfreundlicher zu gestalten, wurden in der Vergangenheit Verfahren entwickelt, um das bei der SMR oder ATR erzeugte Kohlendioxid als möglichst reines Kohlendioxidprodukt aus dem primär erzeugten Synthesegasgemisch abzutrennen. Dafür stehen Gaswäscheverfahren auf Basis von physikalischer oder chemischer Absorption in Absorptionsmitteln wie Methanol oder Aminen, sowie die tiefkalte flüssige Abscheidung und Reinigung des Kohlendioxids durch Kompression, Kondensation und Destillation zur Verfügung. Das in großen Mengen in Absorptionsmitteln absorbierte und anschließend wieder desorbierte oder bei niedrigen Temperaturen durch Kondensation abgeschiedene Kohlendioxid kann jedoch häufig keiner sinnvollen weiteren industriellen Verwendung zugeführt werden. Häufig bleibt daher nur die Möglichkeit, das nicht verwendbare Kohlendioxid langfristig zu speichern, um es nicht in die Atmosphäre gelangen zu lassen. Die Kombination aus Abscheidung (durch Gaswäsche oder Kondensation) und Speicherung von Kohlendioxid wird auch als Sequestrierung oder CCS *(carbon capture and storage)* bezeichnet.

Es ist daher erforderlich bekannte Prozesse zur Herstellung von Wasserstoff dergestalt zu verbessern, dass von vorneherein geringere Mengen an Kohlendioxid pro Tonne produzierten Wasserstoffs generiert werden.

US 2015/0321914 A1 offenbart ein Verfahren, in dem ein primär durch Dampfreformierung oder autotherme Reformierung erzeugtes Synthesegas durch Konvertierung des im primär erzeugten Synthesegas enthaltenen Kohlenmonoxid mit Dampf zu Kohlendioxid und Wasserstoff umgesetzt wird (Wassergas-Shift-Reaktion). Aus dem mit Kohlendioxid und Wasserstoff angereicherten konvertierten Synthesegas wird anschließend mit Hilfe einer Druckwechseladsorptionseinheit Wasserstoff abgetrennt. Das an Wasserstoff verarmte, jedoch noch kohlendioxidreiche Restgas wird anschließend in einer als kryogene Reinigungseinheit *(cryogenic purification unit* - CPU) bezeichneten Vorrichtung behandelt, um Kohlendioxid in möglichst reiner Form aus dem Restgas abzuscheiden und zu verflüssigen. Das verflüssigte Kohlendioxid kann anschließend einer Lagerung zugeführt oder für Industrie- oder Verbrauchszwecke verwendet werden.

Allgemein ist es eine Aufgabe der vorliegenden Erfindung, die vorgenannten Nachteile des Standes der Technik zu überwinden.

Insbesondere besteht eine Aufgabe der vorliegenden Erfindung darin, bekannte Verfahren so zu modifizieren, dass die pro Gewichtseinheit produzierten Wasserstoffs gebildete Menge Kohlendioxid reduziert wird.

Insbesondere besteht eine Aufgabe der vorliegenden Erfindung darin, die Kohlendioxidemissionen von Verfahren zu reduzieren, welche autotherme Reformierung von Methan mit tiefkalter Kohlendioxidabscheidung kombinieren.

Ein Beitrag zur mindestens teilweisen Erfüllung mindestens einer der obigen Aufgaben wird durch die unabhängigen Ansprüche geleistet. Die abhängigen Ansprüche stellen bevorzugte Ausführungsformen bereit, die zur mindestens teilweisen Erfüllung mindestens einer der Aufgaben beitragen. Bevorzugte Ausgestaltungen von Bestandteilen einer erfindungsgemäßen Kategorie sind, soweit zutreffend, ebenso bevorzugt für gleichnamige oder entsprechende Bestandteile einer jeweils anderen erfindungsgemäßen Kategorie.

Die Ausdrücke "aufweisend", "umfassend" oder "beinhaltend" etc. schließen nicht aus, dass weitere Elemente, Inhaltsstoffe etc. enthalten sein können. Der unbestimmte Artikel "ein" schließt nicht aus, dass eine Mehrzahl vorhanden sein kann.

Die Aufgaben der Erfindung werden zumindest teilweise gelöst durch ein Verfahren zur Herstellung von Wasserstoff durch Reformieren von Kohlenwasserstoffen mit Dampf, sowie zur Abscheidung von Kohlendioxid, wobei das Verfahren die folgenden Schritte umfasst:
(a) Bereitstellen eines Einsatzgasstroms FG, wobei der Einsatzgasstrom FG eine Kohlenwasserstoffkomponente und Dampf umfasst, wobei die Kohlenwasserstoffkomponente zumindest Methan umfasst;
(b) Reformieren zumindest eines Teils des Einsatzgasstroms FG in einem endothermen Reformierungsschritt an einem Reformierungskatalysator zu einem Synthesegasstrom SG1, wobei der Synthesegasstrom SG1 Wasserstoff, Kohlenmonoxid, Kohlendioxid, sowie nicht reagiertes Methan enthält;
(c) Reformieren eines Teils des Einsatzgasstroms FG in einem autothermen Reformierungsschritt zu einem Synthesegasstrom SG2 und Zusammenführen der Synthesegasströme SG1 und SG2 zu einem Synthesegasstrom SG3, oder
   Reformieren des Synthesegasstroms SG1 in einem autothermen Reformierungsschritt zu einem Synthesegasstrom SG3,
   wobei der autotherme Reformierungsschritt exotherme partielle Oxidation umfasst und endotherme Reformierung mit Dampf an einem Reformierungskatalysator umfasst, wobei
   die Synthesegasströme SG2 und SG3 Wasserstoff, Kohlenmonoxid, Kohlendioxid, sowie nicht reagiertes Methan enthalten, und wobei durch den autothermen Reformierungsschritt erzeugte Wärme zum Heizen im endothermen Reformierungsschritt gemäß Schritt (b) genutzt wird;
(d) Konvertieren des im Synthesegasstrom SG3 enthaltenen Kohlenmonoxid mit Dampf zu Wasserstoff und Kohlendioxid zu einem Synthesegasstrom SG4, wobei der Synthesegasstrom SG4 Wasserstoff, Kohlendioxid, nicht reagiertes Methan sowie in Schritt (d) nicht konvertiertes Kohlenmonoxid enthält;
(e) Abtrennen von Wasserstoff aus dem Synthesegasstrom SG4 durch Druckwechseladsorption, wobei ein wasserstoffreicher Strom HG1 sowie ein Restgasstrom RG1 erhalten werden, wobei der Restgasstrom RG1 Kohlendioxid, in Schritt (d) nicht konvertiertes Kohlenmonoxid, in Schritt (e) nicht abgetrennten Wasserstoff sowie nicht reagiertes Methan enthält;
(f) Abtrennen von Kohlendioxid aus dem in Schritt (e) erzeugten Restgasstrom RG1 durch tiefkalte Kohlendioxid-Abscheidung, wobei ein kohlendioxidreicher Strom CG1 sowie ein Restgasstrom RG2 erhalten werden, wobei der Restgasstrom RG2 in Schritt (d) nicht konvertiertes Kohlenmonoxid, in Schritt (e) nicht abgetrennten Wasserstoff, in Schritt (f) nicht abgetrenntes Kohlendioxid sowie nicht reagiertes Methan enthält.

Gegenüber aus dem Stand der Technik bekannten Verfahren zeichnet sich das erfindungsgemäße Verfahren dadurch aus, dass gemäß den Schritten (b) und (c) eine Kombination aus endothermem und autothermem Reformierungsschritt zum Einsatz kommt, und durch den autothermen Reformierungsschritt erzeugte Wärme zum Heizen im endothermen Reformierungsschritt gemäß Schritt (b) genutzt wird. Der autotherme Reformierungsschritt wird in einer autothermen Reformerierungseinheit (autothermer Reformer) durchgeführt. Der endotherme Reformierungsschritt wird in einer endothermen Reformierungseinheit durchgeführt (endothermer Reformer, beispielsweise Dampfreformer). Dadurch werden die spezifischen Kohlendioxidemissionen im Hinblick auf den Gesamtprozess überraschenderweise signifikant gesenkt. Unter "spezifischen Kohlendioxidemissionen" wird die Masse an gebildetem CO₂ verstanden, die pro Normkubikmeter produziertem Wasserstoff über den Gesamtprozess gebildet wird. Die spezifischen Kohlendioxidemissionen können beispielsweise in kg CO₂ / Nm³ Wasserstoff angegeben werden.

Im endothermen Reformierungsschritt gemäß Schritt (b) wird das Einsatzgas FG durch Zufuhr von Wärme an einem geeigneten Katalysator zum Synthesegas SG1 umgesetzt. Bei dem Katalysator handelt es sich beispielsweise um einen dem Fachmann bekannten Nickel-Katalysator. Die für den endothermen Reformierungsschritt zum Ablauf der Reformierungsreaktion erforderliche Wärme wird zumindest teilweise, vorzugsweise vollständig durch im autothermen Reformierungsschritt gebildete Wärme geliefert. Je nach Anordnung der Reformierungseinheiten wird das Einsatzgas FG teilweise oder vollständig in die Reformierungseinheit des endothermen Reformierungsschritts eingeschleust und zum Synthesegas SG1 umgesetzt.

Der autotherme Reformierungsschritt gemäß Schritt (c) umfasst einen Schritt einer partiellen Oxidation des Einsatzgasstroms FG und einen nachfolgenden endothermen Reformierungsschritt mit Dampf zur Umsetzung des Einsatzgasstroms FG zum Synthesegasstrom SG2 oder zum Synthesegasstrom SG3. Der Schritt der partiellen Oxidation des autothermen Reformierungsschritts erfordert die Zufuhr eines Oxidationsmittels wie Luft, reinen Sauerstoff oder mit Sauerstoff angereicherter Luft. Das Oxidationsmittel wird üblicherweise über einen Brenner in den autothermen Reformer eingeschleust. Die partielle Oxidation des Einsatzgasstroms FG zum Synthesegasstrom SG2 oder zum Synthesegasstrom SG3 im Rahmen des autothermen Reformierungsschritts ist eine exotherme Reaktion. Die dadurch erzeugte Abwärme wird für den "endothermen Teil" des autothermen Reformierungsschritts genutzt. Der autotherme Reformierungsschritt ist so ausgelegt, dass in Summe, über beide Reaktionsstufen (partielle Oxidation und endotherme Reformierung) genügend Wärme erzeugt wird, welche zum Beheizen des endothermen Reformierungsschritts zur Umsetzung des Einsatzgases FG zum Synthesegas SG1 nutzbar ist.

Das erfindungsgemäße Verfahren beinhaltet zwei durch Schritt (c) definierte Alternativen.

Gemäß der ersten Alternative wird ein Teil des Einsatzgasstroms FG im endothermen Reformierungsschritt zum Synthesegasstrom SG1 reformiert. Ein weiterer Teil des Einsatzgasstroms FG, vorzugsweise der verbleibende Teil des Einsatzgasstroms FG, wird im autothermen Reformierungsschritt zum Synthesegasstrom SG2 reformiert. Die Synthesegasströme SG2 und SG3 werden anschließend zu einem Synthesegasstrom SG3 kombiniert. Daraus ergibt sich eine parallele Anordnung oder Verschaltung der Reformierungseinheiten für den endothermen Reformierungsschritt und für den autothermen Reformierungsschritt.

Gemäß der zweiten Alternative des erfindungsgemäßen Verfahrens wird das Einsatzgas FG vollständig in die Reformierungseinheit des endothermen Reformierungsschritt eingeschleust und zum Synthesegasstrom SG1 umgesetzt. Dabei wird das Einsatzgas FG nur teilweise zum Synthesegas SG1 umgesetzt, das heißt es verbleibt ein vergleichsweise hoher Anteil an Methan und gegebenenfalls anderen reformierbaren Kohlenwasserstoffkomponenten im Synthesegas SG1. Diese verbleibende Menge wird anschließend im autothermen Reformierungsschritt zum Synthesegas SG3 reformiert. Daraus ergibt sich eine serielle Anordnung oder Verschaltung der Reformierungseinheiten für den endothermen Reformierungsschritt und für den autothermen Reformierungsschritt, wobei der autotherme Reformierungsschritt auf den endothermen Reformierungsschritt folgt. Mit anderen Worten, die Reformierungseinheit für den autothermen Reformierungsschritt ist in Gasflussrichtung stromabwärts zur Reformierungseinheit für den endothermen Reformierungsschritt angeordnet.

Vorzugsweise wird der im autothermen Reformierungschritt erzeugte Synthesegasstrom, das heißt der Synthesegasstrom SG2 bei paralleler Anordnung der Reformierungseinheiten oder der Synthesegasstrom SG3 bei serieller Anordnung der Reformierungseinheiten, direkt für die Übertragung von Wärme im endothermen Reformierungsschritt genutzt. Der Synthesegasstrom SG2 und/oder der Synthesegasstrom SG3 weisen dabei vorzugsweise eine Temperatur von 750 bis 1100 °C auf.

Der Einsatzgasstrom FG weist zumindest eine Kohlenwasserstoffkomponente auf, die mit Wasserdampf, zu einem Synthesegas SG1, SG2, SG3 oder SG4 reformierbar ist. Das Synthesegas weist zumindest Wasserstoff, Kohlenmonoxid und Kohlendioxid als Produktkomponenten auf. Der Einsatzgasstrom FG weist zumindest Methan als Kohlenwasserstoffkomponente auf. Weitere höhere analoge Kohlenwasserstoffe wie beispielsweise Ethan, Propan oder Butan können im Einsatzgasstrom FG vorhanden sein.

Ein Einsatzgas kann zunächst in einem sogenannten Vorreformer behandelt werden, um höhere Kohlenwasserstoffe mit Dampf zu kurzkettigen Kohlenwasserstoffen umzuwandeln, insbesondere mit dem Zweck den Methan-Anteil im Einsatzgasstrom FG zu erhöhen. Der Zweck des Vorreformers besteht somit allgemein darin, Kohlenwasserstoffe mit mindestens zwei Kohlenstoffatomen in Kohlenmonoxid, Wasserstoff und Methan umzuwandeln. Ein in einem Vorreformer behandelter Einsatzgasstrom FG kann somit bereits bestimmte Mengen an Kohlenmonoxid und Wasserstoff enthalten.

Der durch die Kombination aus autothermem und endothermem Reformierungsschritt gebildete Synthesegasstrom SG3 wird einem Konvertierungsschritt (d) zugeführt. In diesem Konvertierungsschritt wird im Synthesegasstrom SG3 enthaltenes Kohlenmonoxid mit Wasser durch die sogenannte Wassergas-Shift-Reaktion an einem geeigneten Katalysator zu Wasserstoff und Kohlendioxid umgesetzt. Vor Einschleusen in Schritt (d) wird das Synthesegas SG3 abgekühlt. Davon abhängig ob es sich gemäß Schritt (d) um eine sogenannte Niedrigtemperatur-Shift oder eine Hochtemperatur-Shift handelt, wird das Synthesegas SG3 vor Einschleusen in Schritt (d) mehr oder weniger stark abgekühlt.

Der durch den Konvertierungsschritt (d) gebildete Synthesegasstrom SG4 ist mit Wasserstoff und Kohlendioxid angereichert und an Kohlenmonoxid verarmt. Synthesegasstrom SG4 wird nachfolgend einem Trennschritt (e) unterzogen, in dem weitgehend reiner Wasserstoff aus dem Synthesegasstrom SG4 durch Druckwechseladsorption *(pressure swing adsorption,* PSA) erzeugt wird. Der durch die Druckwechseladsorption erhaltene wasserstoffreiche Strom HG1 weist regelmäßig einen Wasserstoffgehalt von mindestens 95 mol-%, vorzugsweise von mindestens 99 mol-%, weiter bevorzugt von mindestens 99,5 mol-% und weiter bevorzugt von mindestens 99,9 mol-% auf. Das an Wasserstoff verarmte Nebenprodukt des Druckwechseladsorptionsschritts, der Restgasstrom RG1, ist im Vergleich zum Synthesegasstrom SG4 stark an Wasserstoff verarmt und stark mit Kohlendioxid angereichert. Es enthält ferner nicht in Schritt (d) konvertiertes Kohlenmonoxid und nicht in den Schritten (b) und (c) konvertiertes Methan. Durch das Vorhandensein von Gasen mit hohem Heizwert (Methan, Kohlenmonoxid und Wasserstoff) kann es verfahrensintern oder -extern als Brennstoff verwendet werden.

Zur Abtrennung von Kohlendioxid aus dem Restgasstrom RG1 wird dieser einer tiefkalten Kohlendioxid-Abscheidung gemäß Schritt (f) unterzogen, wodurch ein kohlendioxidreicher Strom CG1 sowie ein weiterer Restgasstrom RG2 erhalten werden. Der Trennschritt (f) erfordert die teilweise Kondensation des im Restgasstrom RG1 enthaltenen Kohlendioxid, und zur Erzielung einer bestimmten Reinheit nachfolgend und optional die Destillation des kohlendioxidreichen Stroms CG1. Die tiefkalte Kohlendioxid-Abscheidung wird vorzugsweise bei einer Temperatur von weniger als 35 °C durchgeführt, oder weniger als 20 °C, oder weniger als 0 °C, oder weniger als - 20 °C, oder weniger als - 40 °C, oder weniger als - 50 °C, oder weniger als - 55 °C. Die tiefkalte Kohlendioxid-Abscheidung wird ferner vorzugsweise bei einer Temperatur von mehr als - 60 °C durchgeführt.

Der Synthesegasstrom SG1 kann auch als erster Synthesegasstrom bezeichnet werden, der Synthesegasstrom SG2 als zweiter Synthesegasstrom und so weiter. Dies trifft *mutatis mutandis* auf alle weiteren im Rahmen dieser Offenbarung nummerierten Fluidströme RG, CG und HG zu.

Eine bevorzugte Ausführungsform des erfindungsgemäßen Verfahrens ist dadurch gekennzeichnet, dass aus dem Restgasstrom RG2 Wasserstoff abgetrennt wird, wobei ein wasserstoffreicher Strom HG2 und ein Restgasstrom RG3 erhalten werden. Der Restgasstrom RG2 weist regelmäßig, trotz des vorangegangenen Trennschritts durch Druckwechseladsorption, größere Mengen an Restwasserstoff von bis zu 50 mol-% auf. Es ist daher vorteilhaft, den Restgasstrom 2 einem weiteren Trennschritt zur Abtrennung oder zumindest Anreicherung von Wasserstoff zuzuführen. Vorzugsweise wird der Wasserstoff aus dem Restgasstrom RG2 durch Membrantrennung abgetrennt.

In einem Beispiel des erfindungsgemäßen Verfahrens wird der wasserstoffreiche Strom HG2 dem Synthesegasstrom SG4 zum Abtrennen von Wasserstoff durch Druckwechseladsorption gemäß Schritt (e) zugeführt. Insbesondere Membrantrennverfahren weisen keine ausreichende Selektivität auf, um aus dem Restgasstrom RG2 einen Wasserstoffstrom mit hoher Reinheit, beispielsweise von mehr als 99 mol-%, zu gewinnen. Da ein zweiter Druckwechseladsorptionsschritt im Sinne einer zweiten Druckwechseladsorptionsvorrichtung zu aufwändig und teuer wäre, wird der wasserstoffreiche Strom HG2 in vorteilhafter Weise Schritt (e) zugeführt, wodurch die Wasserstoff-Ausbeute bezogen auf den Gesamtprozess erhöht wird.

Alternativ werden im wasserstoffreichen Strom HG2 enthaltene Gase als Brenngase zum Heizen im autothermen Reformierungsschritt gemäß Schritt c) genutzt. Für den autothermen Reformierungsschritt muss das Einsatzgas FG angewärmt werden, was beispielsweise mittels einer befeuerten Heizeinheit erfolgen kann. Die befeuerte Heizeinheit kann zumindest teilweise mit Hilfe der im wasserstoffreichen Strom HG2 enthaltenen Gase, welche einen hohen Heizwert aufweisen, insbesondere Kohlenmonoxid, Methan und Wasserstoff beheizt werden, um die Wärmeintegration des Prozesses zu verbessern.

Eine bevorzugte Ausführungsform des erfindungsgemäßen Verfahrens ist dadurch gekennzeichnet, dass der kohlendioxidreiche Strom CG1 nicht reagiertes Methan umfasst, und der kohlendioxidreiche Strom CG1 einem thermischen Trennverfahren zur Abtrennung von Methan unterzogen wird, wobei ein kohlendioxidreicher Strom CG2 erhalten wird. Der kohlendioxidreiche Strom kann als Ergebnis der tiefkalten Kohlendioxidabscheidung signifikante Mengen Methan enthalten, beispielsweise bis zu 0,2 mol-% Methan, oder bis zu 0,5 mol-% Methan. Durch einen weiteren Schritt, welcher ein thermisches Trennverfahren beinhaltet, kann der Kohlendioxidgehalt des kohlendioxidreichen Stroms CG1 weiter erhöht werden. Bei dem thermischen Trennverfahren handelt es sich vorzugsweise um eine Destillation. Dadurch kann ein weitgehend reines Kohlendioxidprodukt erhalten werden, welches einfacher einer ökologisch sinnvollen Valorisierung zugeführt werden kann als ein mit Methan verunreinigtes Kohlendioxidprodukt. So kann reines Kohlendioxid beispielsweise mit Elektrolyse-Wasserstoff im richtigen Verhältnis gemischt als Synthesegas zur Methanol-Produktion eingesetzt werden. Auch bei der Sequestrierung des Kohlendioxids hat ein reines Kohlendioxidprodukt Vorteile, da insbesondere mit Methan verunreinigtes Kohlendioxid bei unbeabsichtigter Freisetzung nach Sequestrierung den Treibhauseffekt bekanntermaßen verstärken würde.

Eine bevorzugte Ausführungsform des erfindungsgemäßen Verfahrens ist dadurch gekennzeichnet, dass aus dem Restgasstrom RG3 Kohlendioxid abgetrennt wird, wobei ein kohlendioxidreicher Strom CG3 und ein Restgasstrom RG4 erhalten werden. Vorzugsweise wird das Kohlendioxid aus dem Restgasstrom RG3 durch Membrantrennung abgetrennt, um den kohlendioxidreichen Strom CG3 und den Restgasstrom RG4 zu erhalten.

In einem Beispiel des erfindungsgemäßen Verfahrens werden im Restgasstrom RG4 enthaltene Gase als Brenngase zum Heizen im autothermen Reformierungsschritt gemäß Schritt c) genutzt.

Der kohlendioxidreiche Strom CG3 wird vorzugsweise dem Restgasstrom RG1 zur tiefkalten Kohlendioxid-Abscheidung gemäß Schritt (f) zugeführt. Dadurch wird die Ausbeute an verwertbarem Kohlendioxid gesteigert und die Menge an tatsächlich emittiertem Kohlendioxid auf ein Minimum reduziert.

Eine bevorzugte Ausführungsform des erfindungsgemäßen Verfahrens ist dadurch gekennzeichnet, dass der Restgasstrom RG1 zur tiefkalten Kohlendioxid-Abscheidung gemäß Schritt (f) zumindest einem Verdichtungsschritt sowie zumindest einem Abkühlschritt unterzogen wird, wobei der kohlendioxidreiche Strom CG1 zumindest teilweise als kondensierter Kohlendioxidstrom erhalten wird. Die tiefkalte Kohlendioxid-Abscheidung wird vorzugsweise unter Druck durch Kompression durchgeführt, beispielsweise einem Druck zwischen 5 und 74 bar, wobei Restgasstrom RG1 gleichzeitig vorzugsweise auf eine Temperatur oberhalb des Tripelpunkt des Kohlendioxid (minus 56 °C) oder eine andere für die Kondensation geeignete Temperatur abgekühlt wird. Unter diesen Temperatur- und Druckbedingungen kondensiert das Kohlendioxid teilweise aus, wobei die Flüssigphase mit Kohlendioxid angereichert wird und die Gasphase mit nicht kondensierbaren Gasen angereichert wird. Vorzugsweise und soweit erforderlich beinhaltet Schritt (f) mehrere Verdichtungsschritte und/oder mehrere Abkühlschritte, das heißt die Kondensation von Kohlendioxid aus dem Restgasstrom RG1 erfolgt in mehreren hintereinandergeschalteten Kompressions- und Abkühlschritten.

Vorzugsweise und soweit erforderlich wird der Restgasstrom RG1 im Rahmen von Schritt (f) in einem oder mehreren Schritten getrocknet. Ein Trocknungsschritt kann vor einem Kompressionsschritt, zwischen zwei Kompressionsschritten und/oder nach einem Kompressionsschritt durchgeführt werden. Ein Trocknungsschritt kann ferner vor einem Abkühlschritt, zwischen zwei Abkühlschritten und/oder nach einem Abkühlschritt durchgeführt werden.

Vorzugsweise und soweit erforderlich wird der Restgasstrom RG1 im Rahmen von Schritt (f) zur Entfernung kondensierbarer Bestandteile wie Methanol einem oder mehreren Abscheideschritten unterzogen. Ein Abscheideschritt kann vor einem Kompressionsschritt, zwischen zwei Kompressionsschritten und/oder nach einem Kompressionsschritt durchgeführt werden. Ein Abscheideschritt kann ferner vor einem Abkühlschritt, zwischen zwei Abkühlschritten und/oder nach einem Abkühlschritt durchgeführt werden.

Die Aufgaben der Erfindung werden ferner zumindest teilweise gelöst durch eine Anlage zur Herstellung von Wasserstoff durch Reformieren von Kohlenwasserstoffen mit Dampf, sowie zur Abscheidung von Kohlendioxid, wobei die Anlage folgende miteinander in Fluidverbindung stehende Anlagenkomponenten umfasst:
(a) Mittel zum Bereitstellen eines Einsatzgasstroms FG, wobei der Einsatzgasstrom FG eine Kohlenwasserstoffkomponente und Dampf umfasst, wobei die Kohlenwasserstoffkomponente zumindest Methan umfasst;
(b) eine erste Reformierungseinheit, wobei die erste Reformierungseinheit zum Reformieren zumindest eines Teils des Einsatzgasstroms FG in einem endothermen Reformierungsschritt an einem Reformierungskatalysator konfiguriert ist, wobei in dem endothermen Reformierungsschritt ein Synthesegasstrom SG1 erhältlich ist, wobei der Synthesegasstrom SG1 Wasserstoff, Kohlenmonoxid, Kohlendioxid, sowie nicht reagiertes Methan enthält;
(c) eine zweite Reformierungseinheit, angeordnet parallel oder stromabwärts zur ersten Reformierungseinheit, wobei
   - die zweite Reformierungseinheit bei paralleler Anordnung zur ersten Reformierungseinheit zum Reformieren eines Teils des Einsatzgasstroms FG in einem autothermen Reformierungsschritt konfiguriert ist, wobei
      der autotherme Reformierungsschritt exotherme partielle Oxidation umfasst und endotherme Reformierung mit Dampf an einem Reformierungskatalysator umfasst und in dem autothermen Reformierungsschritt ein Synthesegasstrom SG2 erhältlich ist, und
      die erste und die zweite Reformierungseinheit bei paralleler Anordnung so konfiguriert sind, dass die Synthesegasströme SG1 und SG2 zu einem Synthesegasstrom SG3 zusammenführbar sind,
   - die zweite Reformierungseinheit bei Anordnung stromabwärts zur ersten Reformierungseinheit zum Reformieren zumindest eines Teils des Synthesegasstroms SG1 in einem autothermen Reformierungsschritt konfiguriert ist, wobei
      der autotherme Reformierungsschritt exotherme partielle Oxidation umfasst und endotherme Reformierung mit Dampf an einem Reformierungskatalysator umfasst, wobei
      in dem autothermen Reformierungsschritt ein Synthesegasstrom SG3 erhältlich ist, wobei

   die Synthesegasströme SG2 und SG3 Wasserstoff, Kohlenmonoxid, Kohlendioxid, sowie nicht reagiertes Methan enthalten, und
   die erste Reformierungseinheit (b) und die zweite Reformierungseinheit (c) so konfiguriert sind, dass durch den autothermen Reformierungsschritt in der zweiten Reformierungseinheit (c) erzeugte Wärme zum Heizen in der ersten Reformierungseinheit (b) nutzbar ist;
(d) eine Konvertiereinheit, angeordnet
   - stromabwärts zur ersten und zweiten Reformierungseinheit bei paralleler Anordnung der ersten und der zweiten Reformierungseinheit, oder
   - angeordnet stromabwärts zur zweiten Reformierungseinheit bei Anordnung der zweiten Reformierungseinheit stromabwärts zur ersten Reformierungseinheit, wobei

   die Konvertiereinheit zum Konvertieren des im Synthesegasstrom SG3 enthaltenen Kohlenmonoxid mit Dampf zu Kohlendioxid und Wasserstoff konfiguriert ist, wobei ein Synthesegasstrom SG3 erhältlich ist, und
   der Synthesegasstrom SG3 Wasserstoff, Kohlendioxid, nicht reagiertes Methan sowie in der Konvertiereinheit nicht konvertiertes Kohlenmonoxid enthält;
(e) eine Druckwechseladsorptionseinheit, angeordnet stromabwärts zur Konvertiereinheit, wobei
   die Druckwechseladsorptionseinheit zum Abtrennen von Wasserstoff aus dem Synthesegasstrom SG3 konfiguriert ist, wobei ein wasserstoffreicher Strom HG1 sowie ein Restgasstrom RG1 erhältlich sind, wobei der Restgasstrom RG1 Kohlendioxid, in der Konvertiereinheit nicht konvertiertes Kohlenmonoxid, in der Druckwechseladsorptionseinheit nicht abgetrennten Wasserstoff sowie nicht reagiertes Methan enthält;
(f) eine Abscheideeinheit, angeordnet stromabwärts zur Druckwechseladsorptionseinheit, wobei die Abscheideeinheit zum tiefkalten Abtrennen von Kohlendioxid aus dem in der Druckwechseladsorptionseinheit erzeugten Restgasstrom RG1 konfiguriert ist, wobei ein kohlendioxidreicher Strom CG1 sowie ein Restgasstrom RG2 erhältlich sind, wobei der Restgasstrom RG2 in der Konvertiereinheit nicht konvertiertes Kohlenmonoxid, in der Druckwechseladsorptionseinheit nicht abgetrennten Wasserstoff, in der Abscheideeinheit nicht abgetrenntes Kohlendioxid sowie nicht reagiertes Methan enthält.

Erfindungsgemäß sind die erste Reformierungseinheit (b) und die zweite Reformierungseinheit (c) so konfiguriert, dass durch den autothermen Reformierungsschritt in der zweiten Reformierungseinheit (c) erzeugte Wärme zum Heizen in der ersten Reformierungseinheit (b) nutzbar ist. Die erste Reformierungseinheit ist für einen endothermen Reformierungsschritt konfiguriert. Die zweite Reformierungseinheit ist für einen autothermen Reformierungsschritt konfiguriert. Vorzugsweise ist die zweite Reformierungseinheit ein autothermer Reformer. Die zweite Reformierungseinheit ist parallel zur ersten Reformierungseinheit angeordnet oder stromabwärts (downstream) zur ersten Reformierungseinheit angeordnet.

Bei paralleler Anordnung zur ersten Reformierungseinheit wird in der zweiten Reformierungseinheit ein Synthesegasstrom SG2 erzeugt, welcher mit dem Synthesegasstrom SG1 der ersten Reformierungseinheit zusammenführbar ist. Vorzugsweise wird der Synthesegasstrom SG2 unmittelbar zum Heizen in der ersten Reformierungseinheit genutzt, das heißt die im Synthesegasstrom SG2 enthaltene Wärme wird unmittelbar zum Heizen in der ersten Reformierungseinheit genutzt. "Unmittelbar" bedeutet in diesem Zusammenhang, dass die im Synthesegasstrom SG2 enthaltene Wärme nicht auf eine weiteres Wärmetransportmedium übertragen wird. Die in Synthesegasstrom SG2 enthaltene Wärme wird demnach zum Erzeugen des Synthesegasstroms SG1 im endothermen Prozess der ersten Reformierungseinheit genutzt.

Bei Anordnung stromabwärts zur ersten Reformierungseinheit wird in der zweiten Reformierungseinheit ein Synthesegasstrom SG3 erzeugt. Vorzugsweise wird der Synthesegasstrom SG3 unmittelbar zum Heizen in der ersten Reformierungseinheit genutzt, das heißt die im Synthesegasstrom SG3 enthaltene Wärme wird unmittelbar zum Heizen in der ersten Reformierungseinheit genutzt. "Unmittelbar" bedeutet in diesem Zusammenhang, dass die im Synthesegasstrom SG3 enthaltene Wärme nicht auf ein weiteres Wärmetransportmedium übertragen wird. Die in Synthesegasstrom SG3 enthaltene Wärme wird demnach zum Erzeugen des Synthesegasstroms SG1 im endothermen Prozess der ersten Reformierungseinheit genutzt.

### Ausführungsbeispiele

Die Erfindung wird im Folgenden durch zwei erfindungsgemäße Ausführungsbeispiele sowie ein nicht erfindungsgemäßes Vergleichsbeispiel in Verbindung mit drei Zeichnungen näher erläutert, wobei die Ausführungsbeispiele und die Zeichnungen keine Beschränkung der Erfindung bedeuten.

Es zeigen
- Figur 1: ein Blockfließbild eines Verfahrens oder einer Anlage nach dem Stand der Technik,
- Figur 2: ein Blockfließbild einer ersten Alternative eines erfindungsgemäßen Verfahrens oder einer erfindungsgemäßen Anlage mit paralleler Anordnung der Reformierungseinheiten für den endothermen und den autothermen Reformierungsschritt,
- Figur 3: ein Blockfließbild einer zweiten Alternative eines erfindungsgemäßen Verfahrens oder einer erfindungsgemäßen Anlage mit serieller Anordnung der Reformierungseinheiten für den endothermen und den autothermen Reformierungsschritt.

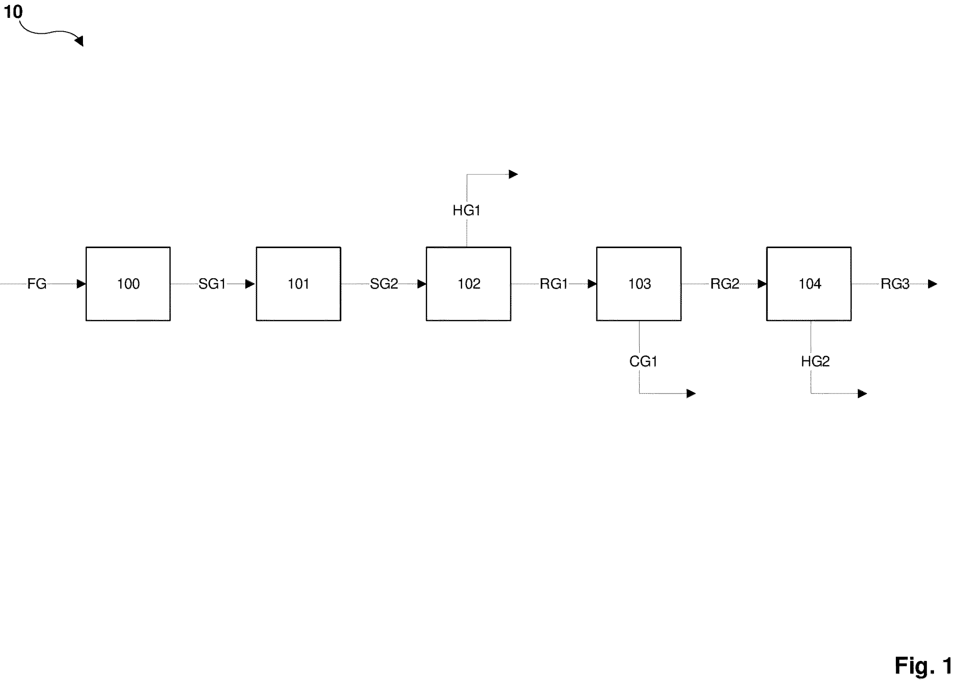

Figur 1 zeigt ein stark vereinfachtes Blockfließbild eines Verfahrens oder einer Anlage gemäß dem Stand der Technik, wie beispielsweise in der US 2015/0321914 offenbart. Ein Einsatzgasstrom FG wird in eine autotherme Reformierungseinheit 100 eingeschleust und zu einem Synthesegasstrom SG1 umgesetzt. Synthesegasstrom SG1 wird nachfolgend in eine Konvertiereinheit 101 eingeschleust, wodurch in Synthesegasstrom SG1 enthaltenes Kohlenmonoxid mit Wasserdampf zu Kohlendioxid und Wasserstoff umgesetzt wird. Mit Wasserstoff angereicherter Synthesegasstrom SG2 wird nachfolgend in eine Druckwechseladsorptionseinheit 102 eingeschleust, um Wasserstoff aus dem Synthesegasstrom SG2 mit hoher Reinheit abzutrennen. Aus der Druckwechseladsorptionseinheit 102 abgetrennter Wasserstoff wird in Form eines wasserstoffreichen Stroms HG1 aus der Druckwechseladsorptionseinheit 102 ausgeschleust. Ebenfalls wird ein an Wasserstoff verarmter Restgasstrom RG1 aus der Druckwechseladsorptionseinheit 102 abgezogen und in eine Abscheideeinheit 103 eingeschleust. In der Abscheideeinheit 103 wird Kohlendioxid durch mehrere Kompressions- und Abkühlschritte sowie Trocknungsschritte in hoher Reinheit abgeschieden und als kohlendioxidreicher Strom CG1 aus der Abscheideeinheit abgezogen. Kohlendioxidreicher Strom CG1 enthält noch signifikante Restmengen Methan, die optional durch Destillation des kohlendioxidreichen Stroms CG1 entfernbar sind (nicht gezeigt). Das resultierende reine Kohlendioxidprodukt eignet sich für die Sequestrierung des Kohlendioxids oder für eine Weiterverwendung, beispielsweise die Synthese von Methanol durch Umsetzung mit aus Elektrolysestrom erzeugtem Wasserstoff. Aus der Abscheideeinheit 103 wird auch ein stark an Kohlendioxid verarmter Restgasstrom RG2 abgezogen und in eine Membraneinheit 104 eingeschleust. Durch Membrantrennung wird in Membraneinheit 104 ein gegenüber Restgasstrom RG2 mit Wasserstoff angereicherter wasserstoffreicher Strom HG2 erzeugt und aus der Membraneinheit 104 abgezogen. Ferner wird ein gegenüber Restgasstrom RG2 an Wasserstoff verarmter Restgasstrom RG3 erzeugt und aus der Membraneinheit 104 abgezogen. Wasserstoffreicher Strom HG2 kann zur weiteren Verwendung optional entweder zur Druckadsorptionseinheit 102 zur Steigerung der Wasserstoffausbeute zurückgeführt werden oder als Brenngas in der autothermen Reformierungseinheit 100 verwendet werden.

Die nachfolgende Tabelle 1 zeigt eine Materialbilanz einer Simulation eines Verfahrens gemäß Figur 1. Die Simulation wurde mit Hilfe der Software "Aspen Plus" durchgeführt. Die Zusammensetzung des Einsatzgasstroms ist ohne Dampfzusatz angegeben.

**Tabelle 1: Materialbilanz Vergleichsbeispiel**

| | | FG | SG1 | SG2 | HG1 | RG1 | RG2 | CG1 | HG2 | RG3 |
|---|---|---|---|---|---|---|---|---|---|---|
| Temperatur | °C | 40 | 975 | 40 | 40 | 40 | 40 | 40 | 40 | 40 |
| Druck | bar | 51 | 47 | 43 | 43 | 2 | 20 | 30 | 30 | 3 |
| Stoffmengenstrom | kmol/h | 3869 | 16768 | 14272 | 8923 | 5349 | 2570 | 2750 | 1841 | 729 |
| CO₂ | mol-% | 0,77 | 6,46 | 24,57 | 0,00 | 65,57 | 29,69 | 99,77 | 33,77 | 19,39 |
| CO | mol-% | 0,00 | 15,77 | 0,97 | 0,00 | 2,58 | 5,38 | 0,00 | 1,84 | 14,33 |
| H₂ | mol-% | 0,00 | 46,88 | 71,04 | 99,99 | 22,75 | 47,35 | 0,00 | 61,96 | 10,44 |
| N₂ | mol-% | 0,54 | 0,12 | 0,15 | 0,00 | 0,38 | 0,80 | 0,00 | 0,19 | 2,32 |
| CH₄ | mol-% | 94,31 | 2,17 | 2,55 | 0,00 | 6,81 | 13,93 | 0,23 | 2,24 | 43,44 |
| C₂H₆ | mol-% | 3,96 | 0,00 | 0,00 | 0,00 | 0,00 | 0,00 | 0,00 | 0,00 | 0,00 |
| C₃H₈ | mol-% | 0,39 | 0,00 | 0,00 | 0,00 | 0,00 | 0,00 | 0,00 | 0,00 | 0,00 |
| C₄H₁₀ | mol-% | 0,03 | 0,00 | 0,00 | 0,00 | 0,00 | 0,00 | 0,00 | 0,00 | 0,00 |
| H₂O | mol-% | 0,00 | 28,57 | 0,52 | 0,00 | 1,38 | 1,78 | 0,00 | 0,00 | 6,28 |
| Methanol | mol-% | 0,00 | 0,00 | 0,17 | 0,00 | 0,46 | 0,92 | 0,00 | 0,00 | 3,24 |
| Ar | mol-% | 0,00 | 0,02 | 0,03 | 0,00 | 0,08 | 0,16 | 0,00 | 0,00 | 0,55 |

Die spezifische Kohlendioxidemission des Verfahrens gemäß dem Verfahren der Figur 1 mit der Materialbilanz entsprechend Tabelle 1 liegt bei 0,140 kg CO₂ pro Normkubikmeter (Nm³) erzeugten Wasserstoffs.

Anstatt der autothermen Reformierungseinheit 100 kann auch, wie ebenfalls in der US 2015/0321914 offenbart, eine endotherme Reformierungseinheit verwendet werden. Insbesondere kann es sich bei der endothermen Reformierungseinheit um einen dem Fachmann bekannten Dampfreformer handeln. Im Falle der Verwendung eines Dampfreformers liegt die spezifische Kohlendioxid-Emission mit 0,396 kg CO₂ pro Normkubikmeter erzeugten Wasserstoffs mehrfach höher als bei Verwendung eines autothermen Reformers.

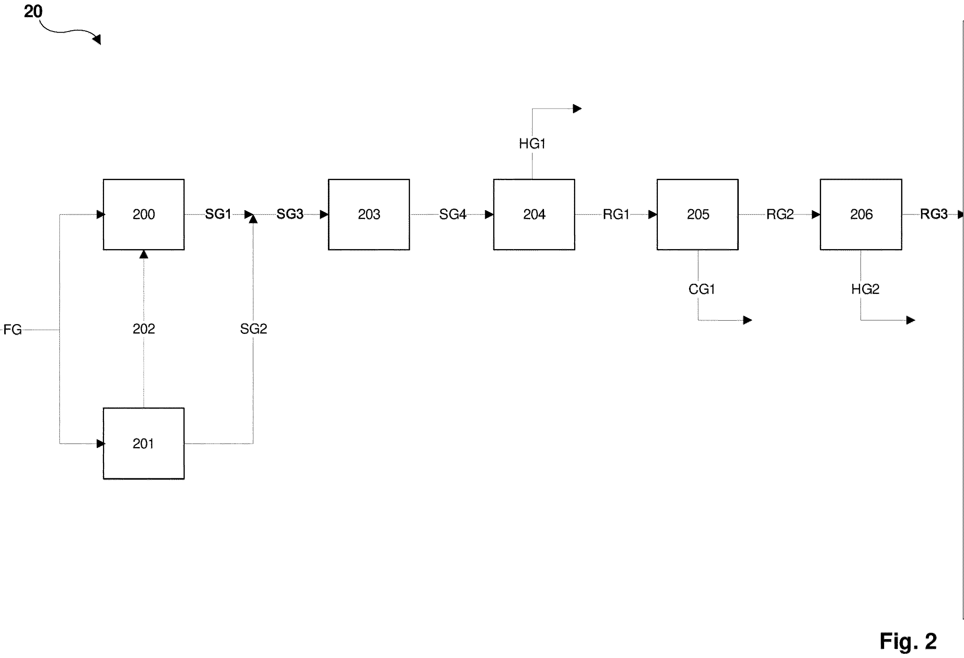

Figur 2 zeigt ein stark vereinfachtes Blockfließbild eines Verfahrens oder einer Anlage gemäß einem ersten Beispiel der Erfindung (Beispiel 1) mit paralleler Anordnung der Reformierungseinheiten. Ein Einsatzgasstrom FG wird auf zwei Teilströme aufgeteilt. Ein erster Teilstrom des Einsatzgasstroms FG wird in eine endotherme Reformierungseinheit 200 (erste Reformierungseinheit, konfiguriert für einen endothermen Reformierungsschritt) eingeschleust. Ein zweiter Teilstrom des Einsatzgasstroms FG wird in eine autotherme Reformierungseinheit 201 (zweite Reformierungseinheit, konfiguriert für einen autothermen Reformierungsschritt) eingeschleust. In der endothermen Reformierungseinheit 200 wird der erste Teilstrom des Einsatzgasstroms FG zu einem Synthesegasstrom SG 1 umgesetzt. In der autothermen Reformierungseinheit 201 wird der zweite Teilstrom des Einsatzgasstroms FG zu einem Synthesegasstrom SG2 umgesetzt. Die im autothermen Reformierungsschritt der autothermen Reformierungseinheit 201 erzeugte Wärme wird zum Heizen im endothermen Reformierungsschritt der endothermen Reformierungseinheit 200 genutzt, angezeigt durch den Wärmestrom 202. Vorzugsweise wird der zweite Synthesegasstrom SG2 unmittelbar zum Heizen im endothermen Reformierungsschritt der endothermen Reformierungseinheit 200 genutzt, das heißt die im zweiten Synthesegasstrom SG2 enthaltene Wärme wird ohne Übertragung auf ein weiteres Wärmetransportmedium zum Heizen im endothermen Reformierungsschritt der endothermen Reformierungseinheit 201 genutzt.

Die durch die endotherme Reformierungseinheit 200 und die autotherme Reformierungseinheit 201 erzeugten Synthesegasströme SG1 und SG2 werden zusammengeführt zu einem gemischten Synthesegasstrom SG3, welcher in eine Konvertiereinheit 203 eingeschleust wird, wodurch in Synthesegasstrom SG3 enthaltenes Kohlenmonoxid mit Wasserdampf zu Kohlendioxid und Wasserstoff umgesetzt wird. Mit Wasserstoff angereicherter Synthesegasstrom SG4 wird nachfolgend in eine Druckwechseladsorptionseinheit 204 eingeschleust, um Wasserstoff aus dem Synthesegasstrom SG4 mit hoher Reinheit abzutrennen. Aus der Druckwechseladsorptionseinheit 204 abgetrennter Wasserstoff wird in Form eines wasserstoffreichen Stroms HG1 aus der Druckwechseladsorptionseinheit 204 ausgeschleust. Ebenfalls wird ein an Wasserstoff verarmter erster Restgasstrom RG1 aus der Druckwechseladsorptionseinheit 204 abgezogen und in eine Abscheideeinheit 205 eingeschleust. In der Abscheideeinheit 205 wird Kohlendioxid durch mehrere Kompressions- und Abkühlschritte sowie Trocknungsschritte in hoher Reinheit abgeschieden und als kohlendioxidreicher Strom CG1 aus der Abscheideeinheit 205 abgezogen. Kohlendioxidreicher Strom CG1 enthält noch signifikante Restmengen Methan, die optional durch Destillation des kohlendioxidreichen Stroms CG1 entfernbar sind (nicht gezeigt). Das resultierende reine Kohlendioxidprodukt eignet sich für die Sequestrierung des Kohlendioxids oder für eine Weiterverwendung, beispielsweise die Synthese von Methanol durch Umsetzung mit aus Elektrolyse erzeugtem Wasserstoff.

Aus der Abscheideeinheit 205 wird auch ein stark an Kohlendioxid verarmter Restgasstrom RG2 abgezogen und in eine Membraneinheit 206 eingeschleust. Durch Membrantrennung wird in Membraneinheit 206 ein gegenüber dem Restgasstrom RG2 ein mit Wasserstoff angereicherter wasserstoffreicher Strom HG2 erzeugt und aus der Membraneinheit 206 abgezogen. Ferner wird ein gegenüber dem Restgasstrom RG2 ein an Wasserstoff verarmter Restgasstrom RG3 erzeugt und aus der Membraneinheit 206 abgezogen. Der wasserstoffreiche Strom HG2 kann zur weiteren Verwendung optional entweder zur Druckadsorptionseinheit 204 zur Steigerung der Gesamtwasserstoffausbeute des Prozesses zurückgeführt werden oder als Brenngas in der autothermen Reformierungseinheit 201 verwendet werden.

Die nachfolgende Tabelle 2 zeigt eine Materialbilanz einer Simulation des ersten Beispiels eines erfindungsgemäßen Verfahrens gemäß Figur 2. Die Simulation wurde mit Hilfe der Software "Aspen Plus" durchgeführt. Die Zusammensetzung des Einsatzgasstroms ist ohne Dampfzusatz angegeben.

**Tabelle 2: Materialbilanz Beispiel 1**

| | | FG | SG3 | SG4 | HG1 | RG1 | RG2 | CG1 | HG2 | RG3 |
|---|---|---|---|---|---|---|---|---|---|---|
| Temperatur | °C | 40 | 958 | 40 | 40 | 40 | 40 | 40 | 40 | 40 |
| Druck | bar | 51 | 47 | 42 | 41 | 2 | 20 | 20 | 40 | 5 |
| Stoffmengenstrom | kmol/h | 3252 | 15139 | 12476 | 8923 | 5400 | 2671 | 2729 | 1847 | 824 |
| CO₂ | mol-% | 0,77 | 6,07 | 22,93 | 0,00 | 64,40 | 28,32 | 99,71 | 33,36 | 17,01 |
| CO | mol-% | 0,00 | 13,96 | 0,88 | 0,00 | 2,70 | 5,46 | 0,00 | 1,93 | 13,36 |
| H₂ | mol-% | 0,00 | 47,34 | 72,13 | 99,99 | 22,53 | 45,54 | 0,00 | 61,74 | 9,24 |
| N₂ | mol-% | 0,54 | 0,12 | 0,14 | 0,00 | 0,38 | 0,78 | 0,00 | 0,20 | 2,08 |
| CH₄ | mol-% | 94,31 | 2,65 | 3,21 | 0,00 | 8,37 | 16,63 | 0,29 | 2,77 | 47,69 |
| C₂H₆ | mol-% | 3,96 | 0,00 | 0,00 | 0,00 | 0,00 | 0,00 | 0,00 | 0,00 | 0,00 |
| C₃H₈ | mol-% | 0,39 | 0,00 | 0,00 | 0,00 | 0,00 | 0,00 | 0,00 | 0,00 | 0,00 |
| C₄H₁₀ | mol-% | 0,03 | 0,00 | 0,00 | 0,00 | 0,00 | 0,00 | 0,00 | 0,00 | 0,00 |
| H₂O | mol-% | 0,00 | 29,85 | 0,53 | 0,00 | 1,23 | 2,49 | 0,00 | 0,00 | 8,07 |
| Methanol | mol-% | 0,00 | 0,00 | 0,15 | 0,00 | 0,34 | 0,69 | 0,00 | 0,00 | 2,25 |
| Ar | mol-% | 0,00 | 0,02 | 0,02 | 0,00 | 0,05 | 0,10 | 0,00 | 0,00 | 0,31 |

Die spezifische Kohlendioxidemission des Verfahrens gemäß Figur 2 mit der Materialbilanz entsprechend Tabelle 2 liegt bei 0,128 kg CO₂ pro Normkubikmeter (Nm³) erzeugten Wasserstoffs. Gegenüber dem Vergleichsbeispiel entspricht dies einer Reduktion der spezifischen Kohlendioxidemissionen von 9 %.

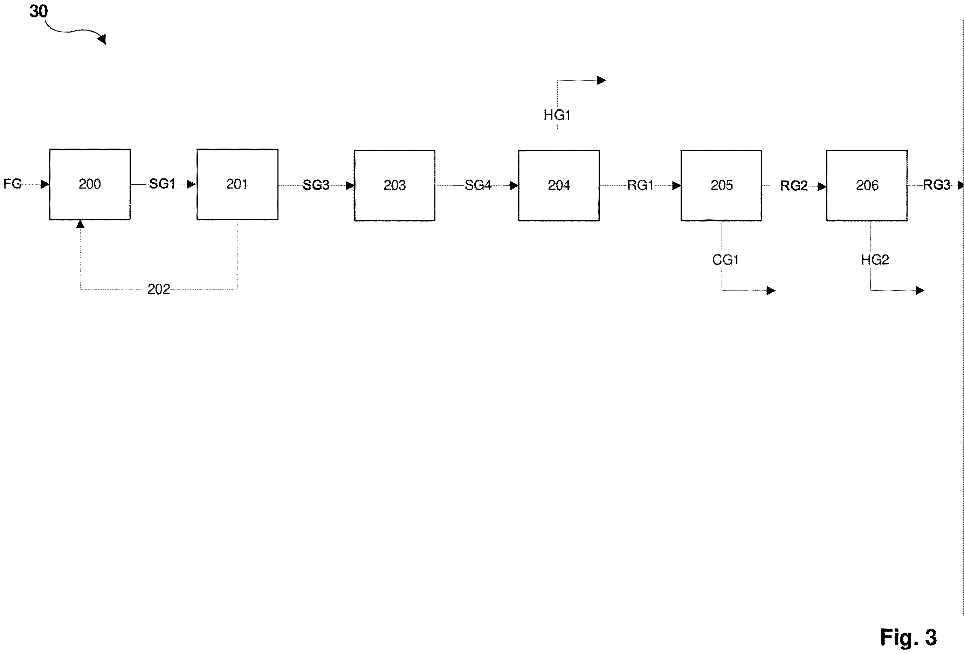

Figur 3 zeigt ein stark vereinfachtes Blockfließbild eines Verfahrens oder einer Anlage gemäß einem zweiten Beispiel der Erfindung (Beispiel 2). Das Verfahren oder die Anlage gemäß Figur 3 unterscheidet sich vom Verfahren oder der Anlage gemäß Figur 2 durch die serielle Anordnung oder Verschaltung der Reformierungseinheiten. Die endotherme Reformierungseinheit 200 (erste Reformierungseinheit, konfiguriert für einen endothermen Reformierungsschritt) ist in Gasflussrichtung stromaufwärts (upstream) zur autothermen Reformierungseinheit 201 (zweite Reformierungseinheit, konfiguriert für einen autothermen Reformierungsschritt) angeordnet, welche entsprechend in Gasflussrichtung stromabwärts (downstream) zur endothermen Reformierungseinheit 200 angeordnet ist. Ein Einsatzgasstrom FG wird in eine endotherme Reformierungseinheit 200 eingeschleust und zu einem Synthesegasstrom SG1 umgesetzt. Der Synthesegasstrom SG1 wird in der autothermen Reformierungseinheit 201 zu einem Synthesegasstrom SG3 umgesetzt. Die im autothermen Reformierungsschritt der autothermen Reformierungseinheit 201 erzeugte Wärme wird zum Heizen im endothermen Reformierungsschritt der endothermen Reformierungseinheit 200 genutzt, angezeigt durch den Wärmestrom 202. Vorzugsweise wird Synthesegasstrom SG3 unmittelbar zum Heizen im endothermen Reformierungsschritt der endothermen Reformierungseinheit 200 genutzt, das heißt die in Synthesegasstrom SG3 enthaltene Wärme wird ohne weitere Übertragung auf ein Wärmetransportmedium zum Heizen im endothermen Reformierungsschritt der endothermen Reformierungseinheit 200 genutzt. Alle folgenden Prozessschritte entsprechen Beispiel 1 gemäß Figur 2.

Die nachfolgende Tabelle 3 zeigt eine Materialbilanz einer Simulation des zweiten Beispiels eines erfindungsgemäßen Verfahrens gemäß Figur 3. Die Simulation wurde mit Hilfe der Software "Aspen Plus" durchgeführt. Die Zusammensetzung des Einsatzgasstroms ist ohne Dampfzusatz angegeben.

**Tabelle 3: Materialbilanz Beispiel 2**

| | | FG | SG3 | SG4 | HG1 | RG1 | RG2 | CG1 | HG2 | RG3 |
|---|---|---|---|---|---|---|---|---|---|---|
| Temperatur | °C | 40 | 975 | 40 | 40 | 40 | 40 | 40 | 40 | 40 |
| Druck | bar | 51 | 44 | 39 | 39 | 2 | 20 | 20 | 40 | 5 |
| Stoffmengenstrom | kmol/h | 2540 | 15037 | 11714 | 8923 | 4281 | 4281 | 2242 | 1491 | 549 |
| CO₂ | mol-% | 0,77 | 5,02 | 20,09 | 0,00 | 66,80 | 66,80 | 99,82 | 34,01 | 21,01 |
| CO | mol-% | 0,00 | 11,40 | 0,66 | 0,00 | 2,39 | 2,39 | 0,00 | 1,68 | 14,08 |
| H₂ | mol-% | 0,00 | 49,59 | 76,71 | 100,0 | 23,16 | 23,16 | 0,00 | 62,35 | 11,31 |
| N₂ | mol-% | 0,54 | 0,09 | 0,12 | 0,00 | 0,39 | 0,39 | 0,00 | 0,19 | 2,50 |
| CH₄ | mol-% | 94,31 | 1,37 | 1,76 | 0,00 | 5,44 | 5,44 | 0,18 | 1,77 | 36,91 |
| C₂H₆ | mol-% | 3,96 | 0,00 | 0,00 | 0,00 | 0,00 | 0,00 | 0,00 | 0,00 | 0,00 |
| C₃H₈ | mol-% | 0,39 | 0,00 | 0,00 | 0,00 | 0,00 | 0,00 | 0,00 | 0,00 | 0,00 |
| C₄H₁₀ | mol-% | 0,03 | 0,00 | 0,00 | 0,00 | 0,00 | 0,00 | 0,00 | 0,00 | 0,00 |
| H₂O | mol-% | 0,00 | 32,52 | 0,56 | 0,00 | 1,54 | 1,54 | 0,00 | 0,00 | 12,04 |
| Methanol | mol-% | 0,00 | 0,00 | 0,10 | 0,00 | 0,27 | 0,27 | 0,00 | 0,00 | 2,08 |
| Ar | mol-% | 0,00 | 0,00 | 0,00 | 0,00 | 0,01 | 0,01 | 0,00 | 0,00 | 0,09 |

Die spezifische Kohlendioxidemission des Verfahrens gemäß Figur 3 mit der Materialbilanz entsprechend Tabelle 3 liegt bei 0,118 kg CO₂ pro Normkubikmeter (Nm³) erzeugten Wasserstoffs. Gegenüber dem Vergleichsbeispiel entspricht dies einer Reduktion der spezifischen Kohlendioxidemission von 15 %. Ferner ergibt sich durch die serielle Anordnung der Reformierungseinheiten 200 und 201 im Hinblick auf die Reduktion der spezifischen Kohlendioxidemission ein Vorteil gegenüber der parallelen Anordnung der Reformierungseinheiten 200 und 201 gemäß Figur 2.

### Bezugszeichenliste

- FG: Einsatzgasstrom
- SG1: Synthesegasstrom
- SG2: Synthesegasstrom
- SG3: Synthesegasstrom
- SG4: Synthesegasstrom
- HG1: Wasserstoffreicher Strom
- HG2: Wasserstoffreicher Strom
- CG1: Kohlendioxidreicher Strom
- RG1: Restgasstrom
- RG2: Restgasstrom
- RG3: Restgasstrom

- 100: autotherme Reformierungseinheit
- 101: Konvertiereinheit
- 102: Druckwechseladsorptionseinheit
- 103: Abscheideeinheit
- 104: Membraneinheit

- 200: Endotherme Reformierungseinheit
- 201: Autotherme Reformierungseinheit
- 202: Wärmestrom
- 203: Konvertiereinheit
- 204: Druckwechseladsorptionseinheit
- 205: Abscheideeinheit
- 206: Membraneinheit

## Patentansprüche

1. Verfahren zur Herstellung von Wasserstoff durch Reformieren von Kohlenwasserstoffen mit Dampf, sowie zur Abscheidung von Kohlendioxid, wobei das Verfahren die folgenden Schritte umfasst:
(a) Bereitstellen eines Einsatzgasstroms FG, wobei der Einsatzgasstrom FG eine Kohlenwasserstoffkomponente und Dampf umfasst, wobei die Kohlenwasserstoffkomponente zumindest Methan umfasst;
(b) Reformieren zumindest eines Teils des Einsatzgasstroms FG in einem endothermen Reformierungsschritt an einem Reformierungskatalysator zu einem Synthesegasstrom SG1, wobei der Synthesegasstrom SG1 Wasserstoff, Kohlenmonoxid, Kohlendioxid, sowie nicht reagiertes Methan enthält;
(c) Reformieren eines Teils des Einsatzgasstroms FG in einem autothermen Reformierungsschritt zu einem Synthesegasstrom SG2 und Zusammenführen der Synthesegasströme SG1 und SG2 zu einem Synthesegasstrom SG3, oder
Reformieren des Synthesegasstroms SG1 in einem autothermen Reformierungsschritt zu einem Synthesegasstrom SG3,
wobei der autotherme Reformierungsschritt exotherme partielle Oxidation umfasst und endotherme Reformierung mit Dampf an einem Reformierungskatalysator umfasst, wobei
die Synthesegasströme SG2 und SG3 Wasserstoff, Kohlenmonoxid, Kohlendioxid, sowie nicht reagiertes Methan enthalten, und wobei durch den autothermen Reformierungsschritt erzeugte Wärme zum Heizen im endothermen Reformierungsschritt gemäß Schritt (b) genutzt wird;
(d) Konvertieren des im Synthesegasstrom SG3 enthaltenen Kohlenmonoxid mit Dampf zu Wasserstoff und Kohlendioxid zu einem Synthesegasstrom SG4, wobei der Synthesegasstrom SG4 Wasserstoff, Kohlendioxid, nicht reagiertes Methan sowie in Schritt (d) nicht konvertiertes Kohlenmonoxid enthält;
(e) Abtrennen von Wasserstoff aus dem Synthesegasstrom SG4 durch Druckwechseladsorption, wobei ein wasserstoffreicher Strom HG1 sowie ein Restgasstrom RG1 erhalten werden, wobei der Restgasstrom RG1 Kohlendioxid, in Schritt (d) nicht konvertiertes Kohlenmonoxid, in Schritt (e) nicht abgetrennten Wasserstoff sowie nicht reagiertes Methan enthält;
(f) Abtrennen von Kohlendioxid aus dem in Schritt (e) erzeugten Restgasstrom RG1 durch tiefkalte Kohlendioxid-Abscheidung, wobei ein kohlendioxidreicher Strom CG1 sowie ein Restgasstrom RG2 erhalten werden, wobei der Restgasstrom RG2 in Schritt (d) nicht konvertiertes Kohlenmonoxid, in Schritt (e) nicht abgetrennten Wasserstoff, in Schritt (f) nicht abgetrenntes Kohlendioxid sowie nicht reagiertes Methan enthält.

2. Verfahren nach Anspruch 1, **dadurch gekennzeichnet, dass** aus dem Restgasstrom RG2 Wasserstoff abgetrennt wird, wobei ein wasserstoffreicher Strom HG2 und ein Restgasstrom RG3 erhalten werden.

3. Verfahren nach Anspruch 2, **dadurch gekennzeichnet, dass** der Wasserstoff aus dem Restgasstrom RG2 durch Membrantrennung abgetrennt wird.

4. Verfahren nach einem der Ansprüche 2 und 3, **dadurch gekennzeichnet, dass** der wasserstoffreiche Strom HG2 dem Synthesegasstrom SG4 zum Abtrennen von Wasserstoff durch Druckwechseladsorption gemäß Schritt (e) zugeführt wird.

5. Verfahren nach einem der Ansprüche 2 bis 4, **dadurch gekennzeichnet, dass** im wasserstoffreichen Strom HG2 enthaltene Gase als Brenngase zum Heizen im autothermen Reformierungsschritt gemäß Schritt c) genutzt werden.

6. Verfahren nach einem der Ansprüche 1 bis 5, **dadurch gekennzeichnet, dass** der kohlendioxidreiche Strom CG1 nicht reagiertes Methan umfasst, und der kohlendioxidreiche Strom CG1 einem thermischen Trennverfahren zur Abtrennung von Methan unterzogen wird, wobei ein kohlendioxidreicher Strom CG2 erhalten wird.

7. Verfahren nach einem der Ansprüche 2 bis 6, **dadurch gekennzeichnet, dass** aus dem Restgasstrom RG3 Kohlendioxid abgetrennt wird, wobei ein kohlendioxidreicher Strom CG3 und ein Restgasstrom RG4 erhalten werden.

8. Verfahren nach Anspruch 7, **dadurch gekennzeichnet, dass** das Kohlendioxid aus dem Restgasstrom RG3 durch Membrantrennung abgetrennt wird.

9. Verfahren nach einem der Ansprüche 7 bis 8, **dadurch gekennzeichnet, dass** im Restgasstrom RG4 enthaltene Gase als Brenngase zum Heizen im autothermen Reformierungsschritt gemäß Schritt c) genutzt werden.

10. Verfahren nach einem der Ansprüche 7 bis 9, **dadurch gekennzeichnet, dass** der kohlendioxidreiche Strom CG3 dem Restgasstrom RG1 zur tiefkalten Kohlendioxid-Abscheidung gemäß Schritt (f) zugeführt wird.

11. Verfahren nach einem der Ansprüche 1 bis 10, **dadurch gekennzeichnet, dass** der Restgasstrom RG1 zur tiefkalten Kohlendioxid-Abscheidung gemäß Schritt (f) zumindest einem Verdichtungsschritt sowie zumindest einem Abkühlschritt unterzogen wird, wobei der kohlendioxidreiche Strom CG1 zumindest teilweise als kondensierter Kohlendioxidstrom erhalten wird.

12. Anlage zur Herstellung von Wasserstoff durch Reformieren von Kohlenwasserstoffen mit Dampf, sowie zur Abscheidung von Kohlendioxid, wobei die Anlage folgende miteinander in Fluidverbindung stehende Anlagenkomponenten umfasst:
(a) Mittel zum Bereitstellen eines Einsatzgasstroms FG, wobei der Einsatzgasstrom FG eine Kohlenwasserstoffkomponente und Dampf umfasst, wobei die Kohlenwasserstoffkomponente zumindest Methan umfasst;
(b) eine erste Reformierungseinheit, wobei die erste Reformierungseinheit zum Reformieren zumindest eines Teils des Einsatzgasstroms FG in einem endothermen Reformierungsschritt an einem Reformierungskatalysator konfiguriert ist, wobei in dem endothermen Reformierungsschritt ein Synthesegasstrom SG1 erhältlich ist, wobei der Synthesegasstrom SG1 Wasserstoff, Kohlenmonoxid, Kohlendioxid, sowie nicht reagiertes Methan enthält;
(c) eine zweite Reformierungseinheit, angeordnet parallel oder stromabwärts zur ersten Reformierungseinheit, wobei
- die zweite Reformierungseinheit bei paralleler Anordnung zur ersten Reformierungseinheit zum Reformieren eines Teils des Einsatzgasstroms FG in einem autothermen Reformierungsschritt konfiguriert ist, wobei
der autotherme Reformierungsschritt exotherme partielle Oxidation umfasst und endotherme Reformierung mit Dampf an einem Reformierungskatalysator umfasst und
in dem autothermen Reformierungsschritt ein Synthesegasstrom SG2 erhältlich ist, und
die erste und die zweite Reformierungseinheit bei paralleler Anordnung so konfiguriert sind, dass die Synthesegasströme SG1 und SG2 zu einem Synthesegasstrom SG3 zusammenführbar sind,
- die zweite Reformierungseinheit bei Anordnung stromabwärts zur ersten Reformierungseinheit zum Reformieren zumindest eines Teils des Synthesegasstroms SG1 in einem autothermen Reformierungsschritt konfiguriert ist, wobei der autotherme Reformierungsschritt exotherme partielle Oxidation umfasst und endotherme Reformierung mit Dampf an einem Reformierungskatalysator umfasst, wobei in dem autothermen Reformierungsschritt ein Synthesegasstrom SG3 erhältlich ist, wobei
die Synthesegasströme SG2 und SG3 Wasserstoff, Kohlenmonoxid, Kohlendioxid, sowie nicht reagiertes Methan enthalten, und
die erste Reformierungseinheit (b) und die zweite Reformierungseinheit (c) so konfiguriert sind, dass durch den autothermen Reformierungsschritt in der zweiten Reformierungseinheit (c) erzeugte Wärme zum Heizen in der ersten Reformierungseinheit (b) nutzbar ist;
(d) eine Konvertiereinheit, angeordnet
- stromabwärts zur ersten und zweiten Reformierungseinheit bei paralleler Anordnung der ersten und der zweiten Reformierungseinheit, oder
- angeordnet stromabwärts zur zweiten Reformierungseinheit bei Anordnung der zweiten Reformierungseinheit stromabwärts zur ersten Reformierungseinheit, wobei
die Konvertiereinheit zum Konvertieren des im Synthesegasstrom SG3 enthaltenen Kohlenmonoxid mit Dampf zu Kohlendioxid und Wasserstoff konfiguriert ist, wobei ein Synthesegasstrom SG4 erhältlich ist, und
der Synthesegasstrom SG4 Wasserstoff, Kohlendioxid, nicht reagiertes Methan sowie in der Konvertiereinheit nicht konvertiertes Kohlenmonoxid enthält;
(e) eine Druckwechseladsorptionseinheit, angeordnet stromabwärts zur Konvertiereinheit, wobei
die Druckwechseladsorptionseinheit zum Abtrennen von Wasserstoff aus dem Synthesegasstrom SG4 konfiguriert ist, wobei ein wasserstoffreicher Strom HG1 sowie ein Restgasstrom RG1 erhältlich sind, wobei der Restgasstrom RG1 Kohlendioxid, in der Konvertiereinheit nicht konvertiertes Kohlenmonoxid, in der Druckwechseladsorptionseinheit nicht abgetrennten Wasserstoff sowie nicht reagiertes Methan enthält;
(f) eine Abscheideeinheit, angeordnet stromabwärts zur Druckwechseladsorptionseinheit, wobei die Abscheideeinheit zum tiefkalten Abtrennen von Kohlendioxid aus dem in der Druckwechseladsorptionseinheit erzeugten Restgasstrom RG1 konfiguriert ist, wobei ein kohlendioxidreicher Strom CG1 sowie ein Restgasstrom RG2 erhältlich sind, wobei der Restgasstrom RG2 in der Konvertiereinheit nicht konvertiertes Kohlenmonoxid, in der Druckwechseladsorptionseinheit nicht abgetrennten Wasserstoff, in der Abscheideeinheit nicht abgetrenntes Kohlendioxid sowie nicht reagiertes Methan enthält.

## Claims

1. Process for preparing hydrogen by reforming hydrocarbons with steam, and for separation of carbon dioxide, wherein the process comprises the following steps:
(a) providing a feed gas stream FG, wherein the feed gas stream FG comprises a hydrocarbon component and steam, wherein the hydrocarbon component comprises at least methane;
(b) reforming at least a portion of the feed gas stream FG in an endothermic reforming step over a reforming catalyst to give a synthesis gas stream SG1, wherein the synthesis gas stream SG1 comprises hydrogen, carbon monoxide, carbon dioxide, and unreacted methane;
(c) reforming a portion of the feed gas stream FG in an autothermal reforming step to give a synthesis gas stream SG2, and combining the synthesis gas streams SG1 and SG2 to give a synthesis gas stream SG3, or
reforming the synthesis gas stream SG1 in an autothermal reforming step to give a synthesis gas stream SG3,
wherein the autothermal reforming step comprises exothermic partial oxidation and endothermic reforming with steam over a reforming catalyst, wherein
the synthesis gas streams SG2 and SG3 comprise hydrogen, carbon monoxide, carbon dioxide, and unreacted methane, and wherein heat generated by the autothermal reforming step is utilized for heating in the endothermic reforming step of step (b);
(d) converting the carbon monoxide present in the synthesis gas stream SG3 with steam to give hydrogen and carbon dioxide to give a synthesis gas stream SG4, wherein the synthesis gas stream SG4 comprises hydrogen, carbon dioxide, unreacted methane, and carbon monoxide unconverted in step (d);
(e) separating hydrogen from the synthesis gas stream SG4 by pressure swing adsorption, giving a hydrogen-rich stream HG1 and a residual gas stream RG1, wherein the residual gas stream RG1 comprises carbon dioxide, carbon monoxide unconverted in step (d), hydrogen not separated off in step (e), and unreacted methane;
(f) separating carbon dioxide from the residual gas stream RG1 obtained in step (e) by cryogenic carbon dioxide separation, giving a carbon dioxide-rich stream CG1 and a residual gas stream RG2, wherein the residual gas stream RG2 comprises carbon monoxide unconverted in step (d), hydrogen not separated off in step (e), carbon dioxide not separated off in step (f), and unreacted methane.

2. Process according to Claim 1, **characterized in that** hydrogen is separated from the residual gas stream RG2, giving a hydrogen-rich stream HG2 and a residual gas stream RG3.

3. Process according to Claim 2, **characterized in that** the hydrogen is separated from the residual gas stream RG2 by membrane separation.

4. Process according to either of Claims 2 and 3, **characterized in that** the hydrogen-rich stream HG2 is supplied to the synthesis gas stream SG4 for separation of hydrogen by pressure swing adsorption in step (e).

5. Process according to any of Claims 2 to 4, **characterized in that** gases present in the hydrogen-rich stream HG2 are utilized as fuel gases for heating in the autothermal reforming step of step c).

6. Process according to any of Claims 1 to 5, **characterized in that** the carbon dioxide-rich stream CG1 comprises unreacted methane, and the carbon dioxide-rich stream CG1 is subjected to a thermal separation process for separation of methane, giving a carbon dioxide-rich stream CG2.

7. Process according to any of Claims 2 to 6, **characterized in that** carbon dioxide is separated from the residual gas stream RG3, giving a carbon dioxide-rich stream CG3 and a residual gas stream RG4.

8. Process according to Claim 7, **characterized in that** the carbon dioxide is separated from the residual gas stream RG3 by membrane separation.

9. Process according to either of Claims 7 and 8, **characterized in that** gases present in the residual gas stream RG4 are utilized as fuel gases for heating in the autothermal reforming step of step c).

10. Process according to any of Claims 7 to 9, **characterized in that** the carbon dioxide-rich stream CG3 is supplied to the residual gas stream RG1 for cryogenic carbon dioxide separation in step (f).

11. Process according to any of Claims 1 to 10, **characterized in that** the residual gas stream RG1, for cryogenic carbon dioxide separation in step (f), is subjected to at least one compression step and at least one cooling step, giving the carbon dioxide-rich stream CG1 at least partly in the form of a condensed carbon dioxide stream.

12. Plant for preparation of hydrogen by reforming hydrocarbons with steam, and for separation of carbon dioxide, wherein the plant comprises the following plant components in fluid connection with one another:
(a) means of providing a feed gas stream FG, wherein the feed gas stream FG comprises a hydrocarbon component and steam, wherein the hydrocarbon component comprises at least methane;
(b) a first reforming unit, wherein the first reforming unit is configured for reforming at least a portion of the feed gas stream FG in an endothermic reforming step over a reforming catalyst, wherein a synthesis gas stream SG1 is obtainable in the endothermic reforming step, wherein the synthesis gas stream SG1 comprises hydrogen, carbon monoxide, carbon dioxide, and unreacted methane;
(c) a second reforming unit, arranged parallel to or downstream of the first reforming unit, wherein
- the second reforming unit, in the case of parallel arrangement to the first reforming unit, is configured for reforming of a portion of the feed gas stream FG in an autothermal reforming step, wherein
the autothermal reforming step comprises exothermic partial oxidation and endothermic reforming with steam over a reforming catalyst and
a synthesis gas stream SG2 is obtainable in the autothermal reforming step, and
the first and second reforming unit, in the case of parallel arrangement, are configured such that the synthesis gas streams SG1 and SG2 can be combined to give a synthesis gas stream SG3,
- the second reforming unit, in the case of arrangement downstream of the first reforming unit, is configured for reforming of at least a portion of the synthesis gas stream SG1 in an autothermal reforming step, wherein
the autothermal reforming step comprises exothermic partial oxidation and endothermic reforming with steam over a reforming catalyst, wherein
a synthesis gas stream SG3 is obtainable in the autothermal reforming step, wherein
the synthesis gas streams SG2 and SG3 comprise hydrogen, carbon monoxide, carbon dioxide, and unreacted methane, and
the first reforming unit (b) and the second reforming unit (c) are configured such that heat generated in the second reforming unit (c) by the autothermal reforming step is utilizable for heating in the first reforming unit (b);
(d) a converter unit, arranged
- downstream of the first and second reforming unit in the case of parallel arrangement of the first and second reforming unit, or
- arranged downstream of the second reforming unit in the case of arrangement of the second reforming unit downstream of the first reforming unit, wherein
the converter unit is configured for conversion of the carbon monoxide present in the synthesis gas stream SG3 with steam to give carbon dioxide and hydrogen, giving a synthesis gas stream SG4, and
the synthesis gas stream SG4 comprises hydrogen, carbon dioxide, unreacted methane, and carbon monoxide unconverted in the converter unit;
(e) a pressure swing adsorption unit, arranged downstream of the converter unit, wherein
the pressure swing adsorption unit is configured to separate hydrogen from the synthesis gas stream SG4, wherein a hydrogen-rich stream HG1 and a residual gas stream RG1 are obtainable, wherein the residual gas stream RG1 comprises carbon dioxide, carbon monoxide unconverted in the converter unit, hydrogen not separated off in the pressure swing adsorption unit, and unreacted methane;
(f) a separation unit arranged downstream of the pressure swing adsorption unit, wherein the separation unit is configured for cryogenic separation of carbon dioxide from the residual gas stream RG1 produced in the pressure swing adsorption unit, wherein a carbon dioxide-rich stream CG1 and a residual gas stream RG2 are obtainable, wherein the residual gas stream RG2 comprises carbon monoxide unconverted in the converter unit, hydrogen not separated off in the pressure swing adsorption unit, carbon dioxide not separated off in the separation unit, and unreacted methane.

## Revendications

1. Procédé pour la production d'hydrogène par reformage d'hydrocarbures avec de la vapeur, ainsi que pour la séparation de dioxyde de carbone, le procédé comprenant les étapes suivantes :
(a) fourniture d'un courant de gaz de départ FG, le courant de gaz de départ FG omprenant un composant hydrocarboné et de la vapeur, le composant hydrocarboné comprenant au moins du méthane ;
(b) reformage d'au moins une partie du courant de gaz de départ FG dans une étape de reformage endothermique sur un catalyseur de reformage, en un courant de gaz de synthèse SG1, le courant de gaz de synthèse SG1 contenant de l'hydrogène, du monoxyde de carbone, du dioxyde de carbone, ainsi que du méthane n'ayant pas réagi ;
(c) reformage d'une partie du courant de gaz de départ FG dans une étape de reformage autothermique en un courant de gaz de synthèse SG2 et réunion des courants de gaz de synthèse SG1 et SG2 en un courant de gaz de synthèse SG3, ou
reformage du courant de gaz de synthèse SG1 dans une étape de reformage autothermique en un courant de gaz de synthèse SG3,
l'étape de reformage autothermique comprenant oxydation partielle exothermique et comprenant reformage endothermique avec de la vapeur sur un catalyseur de reformage,
les courants de gaz de synthèse SG2 et SG3 contenant de l'hydrogène, du monoxyde de carbone, du dioxyde de carbone, ainsi que du méthane n'ayant pas réagi, et de la chaleur produite par l'étape de reformage autothermique étant utilisée pour le chauffage dans l'étape de reformage endothermique selon l'étape (b) ;
(d) conversion avec de la vapeur du monoxyde de carbone contenu dans le courant de gaz de synthèse SG3 en hydrogène et dioxyde de carbone, aboutissant à un courant de gaz de synthèse SG4, le courant de gaz de synthèse SG4 contenant de l'hydrogène, du dioxyde de carbone, du méthane n'ayant pas réagi ainsi que du monoxyde de carbone non converti dans l'étape (d) ;
(e) séparation d'hydrogène à partir du courant de gaz de synthèse SG4 par adsorption par inversion de pression, avec obtention d'un courant riche en hydrogène HG1 ainsi que d'un courant de gaz résiduel RG1, le courant de gaz résiduel RG1 contenant du dioxyde de carbone, du monoxyde de carbone non converti dans l'étape (d), de l'hydrogène non séparé dans l'étape (e) ainsi que du méthane n'ayant pas réagi ;
(f) séparation de dioxyde de carbone à partir du courant de gaz résiduel RG1 produit dans l'étape (e), par séparation de dioxyde de carbone à très basse température, avec obtention d'un courant riche en dioxyde de carbone CG1 ainsi que d'un courant de gaz résiduel RG2, le courant de gaz résiduel RG2 contenant du monoxyde de carbone non converti dans l'étape (d), de l'hydrogène non séparé dans l'étape (e), du dioxyde de carbone non séparé dans l'étape (f) ainsi que du méthane n'ayant pas réagi.

2. Procédé selon la revendication 1, **caractérisé en ce que** de l'hydrogène est séparé du courant de gaz résiduel RG2, avec obtention d'un courant riche en hydrogène HG2 et d'un courant de gaz résiduel RG3.

3. Procédé selon la revendication 2, **caractérisé en ce que** l'hydrogène provenant du courant de gaz résiduel RG2 est séparé par séparation sur membrane.

4. Procédé selon l'une quelconque des revendications 2 et 3, **caractérisé en ce que** le courant riche en hydrogène HG2 est envoyé au courant de gaz de synthèse SG4 pour la séparation d'hydrogène par adsorption par inversion de pression selon l'étape (e).

5. Procédé selon l'une quelconque des revendications 2 à 4, **caractérisé en ce que** des gaz contenus dans le courant riche en hydrogène HG2 sont utilisés en tant que gaz combustibles pour le chauffage dans l'étape de reformage autothermique selon l'étape c).

6. Procédé selon l'une quelconque des revendications 1 à 5, **caractérisé en ce que** le courant riche en dioxyde de carbone CG1 omprend du méthane n'ayant pas réagi, et le courant riche en dioxyde de carbone CG1 est soumis à un procédé de séparation thermique pour la séparation de méthane, avec obtention d'un courant riche en dioxyde de carbone CG2.

7. Procédé selon l'une quelconque des revendications 2 à 6, **caractérisé en ce que** du dioxyde carbone est séparé du courant de gaz résiduel RG3, avec obtention d'un courant riche en dioxyde de carbone CG3 et d'un courant de gaz résiduel RG4.

8. Procédé selon la revendication 7, **caractérisé en ce que** le dioxyde de carbone est séparé du courant de gaz résiduel RG3 par séparation sur membrane.

9. Procédé selon l'une quelconque des revendications 7 et 8, caractérisé en ce des gaz contenus dans le courant de gaz résiduel RG4 sont utilisés en tant que gaz combustibles pour le chauffage dans l'étape de reformage autothermique selon l'étape c).

10. Procédé selon l'une quelconque des revendications 7 à 9, **caractérisé en ce que** le courant riche en dioxyde de carbone CG3 est envoyé au courant de gaz résiduel RG1 pour la séparation de dioxyde de carbone à très basse température selon l'étape (f).

11. Procédé selon l'une quelconque des revendications 1 à 10, **caractérisé en ce que** le courant de gaz résiduel RG1 est soumis à au moins une étape de compression ainsi qu'à au moins une étape de refroidissement pour la séparation de dioxyde de carbone à très basse température selon l'étape (f), avec obtention du courant riche en dioxyde de carbone CG1, au moins en partie sous forme de courant de dioxyde de carbone condensé.

12. Installation destinée à la production d'hydrogène par reformage d'hydrocarbures avec de la vapeur, ainsi qu'à la séparation de dioxyde de carbone, l'installation comprenant les composants d'installation suivants, se trouvant en communication fluidique entre eux :
(a) des moyens pour la fourniture d'un courant de gaz de départ FG, le courant de gaz de départ FG omprenant un composant hydrocarboné et de la vapeur, le composant hydrocarboné comprenant au moins du méthane ;
(b) une première unité de reformage, la première unité de reformage étant configurée pour le reformage d'au moins une partie du courant de gaz de départ FG dans une étape de reformage endothermique sur un catalyseur de reformage, un courant de gaz de synthèse SG1 étant obtenu dans l'étape de reformage endothermique, le courant de gaz de synthèse SG1 contenant de l'hydrogène, du monoxyde de carbone, du dioxyde de carbone, ainsi que du méthane n'ayant pas réagi ;
(c) une seconde unité de reformage, disposée parallèlement à ou en aval de la première unité de reformage,
- dans la disposition parallèle à la première unité de reformage, la seconde unité de reformage étant configurée pour le refrormage d'une partie du courant de gaz de départ FG dans une étape de reformage autothermique,
l'étape de reformage autothermique comprenant oxydation partielle exothermique et comprenant reformage endothermique avec de la vapeur sur un catalyseur de reformage et
un courant de gaz de synthèse SG2 pouvant être obtenu dans l'étape de reformage autothermique, et
dans la disposition parallèle la première et la seconde unité de reformage étant configurées de telle façon que les courants de gaz de synthèse SG1 et SG2 peuvent être réunis en un courant de gaz de synthèse SG3,
- la seconde unité de reformage, dans la disposition en aval de la première unité de reformage, étant configurée pour le reformage d'au moins une partie du courant de gaz de synthèse SG1 dans une étape de reformage autothermique,
l'étape de reformage autothermique comprenant oxydation partielle exothermique et comprenant reformage endothermique avec de la vapeur sur un catalyseur de reformage,
un courant de gaz de synthèse SG3 pouvant être obtenu dans l'étape de reformage autothermique,
les courants de gaz de synthèse SG2 et SG3 contenant de l'hydrogène, du monoxyde de carbone, du dioxyde de carbone, ainsi que du méthane n'ayant pas réagi, et
la première unité de reformage (b) et la seconde unité de reformage (c) étant configurées de telle façon que de la chaleur produite par l'étape de reformage autothermique dans la seconde unité de reformage (c) est utilisable pour le chauffage dans la première unité de reformage (b) ;
(d) une unité de conversion, disposée
- en aval de la première et de la seconde unité de reformage dans la disposition parallèle de la première et la seconde unité de reformage, ou
- disposée en aval de la seconde unité de reformage dans la disposition de la seconde unité de reformage en aval de la première unité de reformage,
l'unité de conversion étant configurée pour la conversion du monoxyde de carbone contenu dans le courant de gaz de synthèse SG3, avec de la vapeur en dioxyde de carbone et hydrogène, un courant de gaz de synthèse SG4 pouvant être obtenu, et
le courant de gaz de synthèse SG4 contenant de l'hydrogène, du dioxyde de carbone, du méthane n'ayant pas réagi ainsi que du monoxyde de carbone non converti dans l'unité de conversion ;
(e) une unité d'adsorption par inversion de pression, disposée en aval de l'unité de conversion,
l'unité d'adsorption par inversion de pression étant configurée pour la séparation d'hydrogène à partir du courant de gaz de synthèse SG4, un courant riche en hydrogène HG1 ainsi qu'un courant de gaz résiduel RG1 pouvant être obtenus, le courant de gaz résiduel RG1 contenant du dioxyde de carbone, du monoxyde de carbone non converti dans l'unité de conversion, de l'hydrogène non séparé dans l'unité d'adsorption par inversion de pression ainsi que du méthane n'ayant pas réagi ;
(f) une unité de séparation, disposée en aval de l'unité d'adsorption par inversion de pression, l'unité de séparation étant configurée pour la séparation à très basse température de dioxyde de carbone à partir du courant de gaz résiduel RG1 produit dans l'unité d'adsorption par inversion de pression, un courant riche en dioxyde de carbone CG1 ainsi qu'un courant de gaz résiduel RG2 pouvant être obtenus, le courant de gaz résiduel RG2 contenant du monoxyde de carbone non converti dans l'unité de conversion, de l'hydrogène non séparé dans l'unité d'adsorption par inversion de pression, du dioxyde de carbone non séparé dans l'unité de séparation ainsi que du méthane n'ayant pas réagi.
